# EUROPEAN PATENT SPECIFICATION

(11) **EP 3 956 424 B1**
(45) Date of publication and mention of the grant of the patent: **16.08.2023**
(21) Application number: 20863014.5
(22) Date of filing: 22.04.2020
(51) Int. Cl.: C11B 1/04, C11B 1/06, A23L 5/30

(54) **INDUSTRIAL PROCESS TO SUSTAIN VIRGIN-OLIVE-OIL PRODUCTION BY CONVERTING OLIVE FRUIT CONSTITUENTS INTO MARKETABLE PRODUCTS: WATER, DEHYDRATED-SOLID AND VIRGIN-OLIVE-OIL**
INDUSTRIELLER PROZESS ZUR AUFRECHTERHALTUNG DER PRODUKTION VON NATIVEM OLIVENÖL DURCH UMWANDLUNG VON OLIVENFRUCHTBESTANDTEILEN IN MARKTFÄHIGE PRODUKTE: WASSER, ENTWÄSSERTE FESTSTOFFE UND NATIVES OLIVENÖL
PROCÉDÉ INDUSTRIEL POUR ENTRETENIR LA PRODUCTION D'HUILE D'OLIVE VIERGE PAR CONVERSION DE CONSTITUANTS DE FRUIT D'OLIVIER EN PRODUITS COMMERCIALISABLES: EAU, SOLIDE DÉSHYDRATÉ ET HUILE D'OLIVE VIERGE

(43) Date of publication of application: 23.02.2022
(73) Proprietor: Nawwash Abu-Ghunmi, Lina, Amman, Amman 11942 (JO)
(72) Inventor: Nawwash Abu-Ghunmi, Lina, Amman, Amman 11942 (JO)
(74) Representative: Raffay & Fleck
(86) International application number: PCT/IB2020/053784
(87) International publication number: WO 2021/048641

(56) References cited:
- EP-A1- 1 211 303
- EP-A1- 3 604 489
- EP-A2- 3 604 490
- WO-A1-2012/011883
- WO-A1-2014/147651
- US-B2- 6 861 083

## Description

### FIELD OF THE INVENTION

Industrial process for sustainable production/extraction of virgin olive oil industry. Utilization of the whole olive fruit constituents by transforming them into marketable products; (a) virgin olive oil, (b) water of drinking water quality and (c) dehydrated-solids with nutritional and energetic values.

Purpose of the invention is *sustainable* production/extraction of (virgin) olive oil, which is associated with zero waste (by-products) and minimum losses of resources. In other words, the purpose of the invention is to achieve sustainable industrial processes that utilize the whole olive fruit constituents by transforming them into marketable products: water of drinking water quality, dehydrated solid and virgin olive oil.

Invention is industrial processes/systems that utilize the whole olive fruit constituent into marketable products: water of drinking water quality, dehydrated solid and virgin olive oil.

Invention is producing marketable new products: 1) water of drinking water quality, and 2) dehydrated-solid with nutritional and energetic values.

### BACKGROUND OF THE INVENTION

Olive-oil is an agricultural product known for its nutritional and medical values (Awad *et al.,* 2006), with a well-established global market. Olive-oil consists of triglycerides, Free Fatty Acids (FFAs), glycerol, phenols, phosphatides, pigments, flavor compounds (volatile compounds), sterol, and microscopic traces of olive fruit.

Olive-oil quality is a key factor in maintaining oil nutritional and medical values. Thus, International Olive Council (I.O.C, 1996) issued standards for controlling and monitoring olive-oil quality. The standards parameters include; acidity (FFAs), poly-phenols, and peroxides in addition to organoleptic parameters.

Olive-oil quality is a function of the entire olive-oil supply chain stages (Giovacchino *et al.,* 2002) starting from: 1) olive-fruit production process that includes; cultivar, altitude, climate, agriculture practice, and fruit maturity/ripeness index; 2) farm harvesting practice of olive-fruits; 3) olive-fruit transportation conditions to olive-mill, 4) olive-oil extraction processes, and 5) olive-oil post-storage conditions that include storage time-period and temperature. The present invention relates to stage number four, olive-oil extraction processes.

Olive-oil extraction processes face a number of challenges, which include; 1) production of olive-oil with a quality that complies with the international olive oil standards for virgin-oil and extra-virgin-oil. 2) Management of waste streams (by-products) that are associated with olive-oil extraction processes. Waste streams, according to their main composition, are: liquid-waste-stream that is identified as olive-mill wastewater, solid-waste-stream that is identified as pomace and semi-solid-waste-stream that is known as alpeorujo.

Olive-oil extraction processes have been developed from the traditional-technique of pressing to the modern-technique of centrifuging; where the latter is a system of three-phase or two-phase. Traditional and modern olive-oil-extraction processes are relying on one concept. However, they differ in terms of olive-oil yield, olive-oil quality and the by-products (waste stream) quantities and qualities.

The base of olive-oil extraction concept is 1) converting, after washing, olive-fruit constituents; oil, water and solids; into paste. 2) Breaking down water-oil emulsion to enlarge oil droplets that facilitates oil separation. Then 3) separating olive-paste constituents into phases for oil extraction. Varied types of technologies are applied to each of the extraction stages.

Paste preparation is carried out by milling/crushing olive-fruit constituents to form paste in order to facilitate oil extraction. The crushing process brings olive-fruit different constituents into close contact (especially enzymes and their substrates) and exposes these constituents to oxygen, which is essential element in oxidations of lipids and phenols. Thus, this process has a major effect on olive-oil constituent; hydrophilic phenols and volatile components that are responsible for sensory notes. Crushing in the traditional technique is operated on a batch (discontinuous) mode, while crushing in the modern technique is operated on a continuous mode. The discontinuous-mode (stone) crusher, with proper operation conditions, could produce paste to extract virgin oil quality. Keeping in mind that stone crushers have low-working capacity, intensive manual labor, high maintenance frequency, and low ability in extracting chlorophyll from olive skin, in addition to high potential of phenols oxidation due to batch operation (Servili *et al.,* 2012). Therefore continuous-mode crushers have been developed, with hammer-crusher first developed and then mild-crushers were developed. The drawbacks of hammer crushers are increasing oil emulsification, generating heats and strongly degrading olive seed, where the latter two drawbacks contribute to phenols reduction in the oil (Servili *et al.,* 2012). Therefore, the continuous mild-crushers were developed for crushing olive fruit based on the differentiation between its constituents; skin, pulp and stone that includes seed (Servili *et al.,* 2012). Therefore, mild crusher, basically, aims at reducing seed degradation, even more new generation of mild crushers have been developed for stoning olive fruit, which improves the concentrations of both phenols and the volatile compounds in the oil, and modify the volatile compounds composition, meanwhile reducing oil yield (Servili *et al.,* 2012).

Freeing the oil from the olive-paste is carried out by "malaxation" based on kneading and mixing paste combined with heating (Servili *et al.,* 2012). Malaxation breaks down water-oil emulsion to enlarge oil droplets and thus facilitates oil release. Malaxation, similar to crushing, is critical to olive-oil quality; phenols and volatile compounds. Malaxation critical operation parameters are; oxygen, time, temperature, and water. Traditional oil extraction operates stone crusher, not only for crushing olive fruit, but also for paste malaxation for 30-40 minutes. Meanwhile, modern oil extraction system operates an open-air malaxar; i.e. air is in direct contact with paste, thus the consequences are reduction in phenols concertation, losses in the desired volatile compounds, and off-flavor compounds are produced that deteriorate oil quality. Heating is another parameter that exaggerates the problem by accelerating the oxidation of both phenols and the desired volatile compounds. In response to the drawbacks of the open-air malaxars, closed-malaxars were developed to minimize oxygen contact. This provides flexibility in setting malaxation time and temperature to maximize oil yield while maintaining olive-oil quality; i.e. maintaining phenols and volatile compounds. Therefore, malaxation time is optimized at 35-40 minutes and temperature is optimized at 24-27 °C. Hot-process-water is essential for paste malaxation process; however it contributes to the reduction of oil content of hydrophilic phenols that negatively impact oil quality. Traditional malaxars need of hot water is less than modern malaxars; specifically those discharge paste into three-phase decanter, as will be seen in the following paragraph.

Solid-phase-separation aims at separating solid fraction from olive paste. Pressing is the traditional technique, used for oil extraction; for separating olive-paste constituents into solid and liquid, which consists of oil and water. Pressing is a discontinuous technology based on closed-cage system that is replaced by an open- hydraulic system, which is marked by less installation and maintenance costs (Servili *et al.,* 2012). The construction material of open-hydraulic-press should be stainless steel, and the filter mat must be subjected to frequent cleaning to ensure the required olive oil quality. Furthermore, the small amount of hot process water gives the traditional pressing technique an advantage in producing solid (pomace) with low moisture content. However, the discontinuous operation, as mentioned above, of the pressing technology is characterized by low-working capacity, intensive manual labor and intensive maintenance.

Centrifugation is the continuous modern concept for solid-phase and semi-solid-phase separation, which were developed, respectively, into three-phase decanters and two-phase decanters. The main difference between these two types of decanters is the input of hot-process-water and the outputs phases and the outputs qualities. The three-phase decanter needs huge input of hot water while the advantage of two-phase decanter is no water input is required. The three-phase decanter separates olive pastes into three phases; solid (pomace), oil and liquid (wastewater). The two-phase decanter separates olive pastes into two phases; oil and semi-solid (alpeorujo), which is composed of both solids and water. Pomace that is produced by the traditional pressing has the advantage of lower moisture content compared with the pomace produced by the three-phase, which in turn has less moisture than the alpeorujo of the two-phase decanter. Handling alpeorujo is a serious challenge for the olive-oil extraction industry. In this regard, the disadvantage of the three-phase decanter, in addition to use of huge amount of water, is the production of huge amount of wastewater that is greatly burdening olive-oil extraction industry. The oil-yield by three-phase decanter is higher than the oil-yield of the two-phase decanter. However, the two-phase oil-quality, compared with the three-phase, is higher in terms of being richer in phenols concentrations, but the stronger sensory; bitterness and pungent, might be not favorable for all consumers.

Liquid-phase-separation, which aims at extracting olive-oil from water, is carried out by vertical centrifugation. This step is essential in the traditional-pressing for separating the liquid phase into oil and water. Furthermore, vertical centrifugation is applied to purify oil, which is produced by the three-phase decanter to remove the water-residue in the oil. Oil-yield of the three-phase system is higher than that of the pressing system. Meanwhile, oil-quality of the traditional pressing has the advantages of being richer in phenols, and the disadvantage of being less in chlorophyll content.

Management of wastewater, pomace and alpeorujo; the by-products associated with olive-oil extraction, are challenging by their characteristics. Wastewater, pomace and alpeorujo are characterized by high inorganics and organics loads, and among these constituents' are phenols that are toxic to bio-system (Awad *et al.,* 2006). Thus the by-products (wastes) of olive-oil extraction are serious pollutants to environment compartments; water and soil, and increase the pollution burden on the environment. Therefore, a proper treatment of these wastes prior to discharging to the environment is a must; otherwise they should be discharged to specialized sites such as landfill. So management of these wastes is a requirement that increases the financial burden of the olive oil extraction industry and so increases the production cost of olive-oil. In this regard, US 6 861 083 B2 discloses processes to separate olive fruit into different components to produce two different qualities of oil.

Meanwhile WO 2012/011883 A1 discloses a process similar to the conventional process for oil extraction but the process of the WO2012/011883 A1 is continuous.

### SUMMARY OF THE INVENTION

This invention is targeting the challenges facing the olive-oil industry, as mentioned above, that are associated with the production of wastewater, pomace and alpeorujo, meanwhile maintaining the virgin oil quality. Therefore, the core of this invention is to make the olive-oil extraction industry sustainable based on zero waste and minimum losses. Through eliminating the productions of wastewater and pomace, which are keys of this invention, while producing (Extra) (virgin) olive-oil quality.

The core of this invention is recognizing all the constituents of olive fruit as natural resources that should be sustainably utilized. The principle of utilization is based on the fact that olive-fruit constituents have different phases which facilitate their separation; these phases are oil, vegetation water and solids.

Basically this invention is about extracting all the constituents of the olive-fruit and convert them into three useful products; 1) Distilled water from vegetation water, which, under the traditional and modern olive oil extraction techniques, becomes wastewater. This is in addition to avoiding the use of process-water in the olive-oil production process to eliminate wastewater production, which also reduces the consumption of natural water resources 2) Olive-oil for Extra and/or Virgin quality and 3) Dehydrated solid; which is rich in fibers, nutritional and energetic resources and ready to market for direct and indirect use as a final product or as an input for other products. Solid is the major constituent of pomace and alpeorujo that is a serious problem in olive oil production. Furthermore

This invention is an industrial process for extracting all olive-fruits constitutes into three useful products; water, oil and solids. This invented sustainable industrial process reduces water-footprint of olive-oil industry by up-cycling vegetation water and entirely eliminating process water from the production process. Furthermore, this invention reduces carbon-footprint by: replacing the current used heating system by a more efficient heating system, eliminating the use of hot water, and reducing the heating time.

The theoretical concept of this invention is 1) dehydrating the olive fruit to extract vegetation water as a product of drinking water quality, which can be used onsite in the olive mill or marketed offsite. 2) Integrating the functions of grinding, kneading and mixing in a one single stage as follows: sequential grinding of the dehydrated olive fruit that is now composed of oil and solid, and simultaneously, kneading and mixing olive fruits' grinded parts to form the paste for freeing and enlarging oil droplets in order to facilitate oil extraction. 3) oil-solid phase-separation of the paste into (virgin) olive-oil and dehydrated-solid.

Production of drinking quality water: in this invention, the dehydration of olive-fruit produces water of high quality and eliminates wastewater originated from vegetation water, in addition to protecting the quality of olive-fruit, for longer storage time, and enhancing olive-oil quality. Furthermore, this invention of the dehydration of vegetation water eliminates emulsification problem that complicates oil extraction. Moreover, the low concentration/absence of water slows down enzymatic reaction for both hydrolysis and oxidation, which mitigates the negative effects of heating on the hydrolysis and oxidation processes, and thus provides flexibility in operation time to maximize the oil extraction yield. In addition to that, the loss of hydrophilic phenols, which are important constituents of virgin olive-oil, which occurs in the traditional and modern extraction methods, is reduced due to dehydration of extracted vegetation pure distilled water and the elimination of the use of process water. This invention uses microwave radiations to dehydrate olive-fruits under normal atmospheric pressures or vacuum. The evaporated extracted vegetation pure distilled water is collected as condensate. Small fraction of the collected water can be used onsite the olive-mill such as for washing olive-fruit, in the pre-step of dehydration, or for other uses; while the rest of the collected water can be marketed offsite.

This invention integrates the functions of grinding-kneading-mixing of olive fruit in a one single closed-process. Grinding relies mostly on a differentiation-grinding process that grinds olive fruit constituents sequentially starting with the skin and pulp, and then stone and seed. Grinding is carried out in a batch closed-system designed to sequentially grind olive fruit constituents; olive skin and pulp then stone and finishing by seed, with the operation flexibility, if required, of olive stoning. The sequence grinding of olive fruit constituents delays the contact between phenols and oxidizing enzymes that minimizes or eliminates phenols oxidation, meanwhile allows flexibility to extend the operation time to enhance 1) phenols hydrolysis to produce the desired hydrophilic phenols and 2) lipids oxidation to produce the desired volatile compounds for virgin olive-oil quality. Furthermore, the delay in stone grinding, due to sequence-grinding, allows the grinder chamber to be used as a kneading-chamber, where olive-stones, as well as the non-grinded olive fruits, function as balls that knead and mix olive paste to enhance oil extraction. The operation conditions, in particular time, should be determined based on the required grinding degree; size of the particles and whether stoning is required. In this stage it is also possible to separate the stone from pulp and skin paste, and then grind the stones separately. Grinding and kneading are associated with heat-production that is used to heat the paste in a controlled manner. This heating process, taking into consideration the absence of water and the low content of oxygen, enhances the reactions that lead to producing the desired products of phenols and volatile compounds. Water produced in the previous stage could be used for cooling, if required, the paste at grinder-kneader-mixer chamber. An extra arm; i.e. "scraper", could be added to this unit, if required, for mixing the paste and enhancing the oil separation.

This invention also includes the method of separating the olive-oil directly by a closed-press filtration. The press- filter consists of mat with a U-shape that is filled with the oil-solid paste to stratify it , then the U-shape mat, with its content, is passed between two rolls for squeezing out the oil and retaining the dehydrated-solid in the mat. The mat is then emptied and the "dehydrated solid" is collected as an (almost) dry pomace, which is rich in fibers, nutritional and energetic constituents, that is ready for marketing as a final product or as an input for producing other products. The filtered oil, based on its content of mucilage, could be either immediately packaged for the final use or further purified in a vertical centrifuge in order to separate the oil from the mucilage.

### BRIEF DESCRIPTION OF THE DRAWINGS

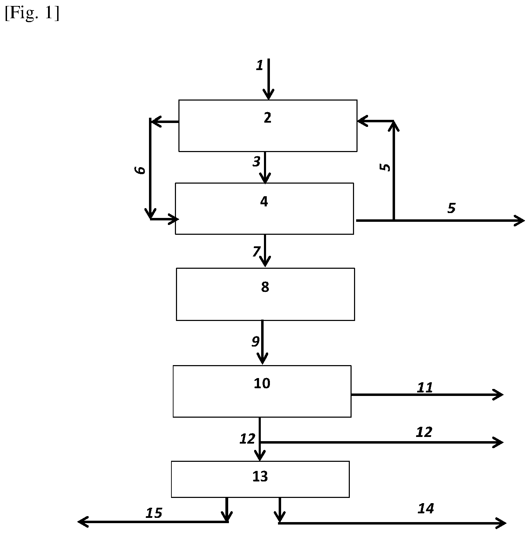

The schematic diagram in Figure 1 visualizes the invented industrial process stages, the invented products and the material flow through the whole process.

Comprehensive illustration of the schematic diagram is integrated and clarified in the next section with exemplifying the invention.

### DETAILED DESCRIPTION OF THE PREFERRED EMBODIMENTS

The best operation mode of applying the invention is illustrated and visualized in Figure 1
1. Washing (2) olive fruits (1) in a basin to remove dirt from the fruit surface. Washing water's (5) source is the water produced in the dehydration (4) stage. The "used washing water" (6) can be re-used for washing other batches of olive fruits (1), depending on its quality, and then can be treated by the microwave oven to produce pure distilled water (5). Washing (2) olive fruits (1) is to be operated on a batch mode.
2. Dehydrating (4) washed olive fruits (3), by subjecting them to a microwave radiation, to remove vegetation water from the olive fruit (3), as well as the residue of the washing water (6) attached to olive fruits. Microwave oven should be designed to be operated at normal atmospheric pressure or under vacuum, and should be equipped with water vapor collector connected to a condenser, in order to condense water vapor to water (5) for use onsite or offsite. Furthermore, Microwave oven should be equipped with temperature controller to control the heating process, which could be carried out continuously or intermittently in order not to overheat olive fruits (3) and the "dehydrated olive fruits" (7). Dehydration (4) of olive fruits (3) should be done in a short period of time (few minutes) to evaporate the vegetation water and any remaining traces of washing water (6) without overheating and burning the olive fruits. Additionally, the internal part of the microwave oven should be designed to allow for the entire batch of olive fruits (3) to be under the same (homogenous) temperature. The microwave oven with its accessories, for dehydration (4), is to be operated on a batch mode.
3. Simultaneous Grinding-Kneading (8) of "dehydrated olive fruit" (7) in a one single closed chamber. The Grinder-Kneader (8) should be designed to consist of a chamber that is equipped with rotating blades, so that upon the blades rotation, the dehydrated olive fruit (7) is sequentially grinded (with or without stoning) from outer to inner parts of dehydrated olive fruit (7); namely starting with the skin and pulp and finishing with the stone and the seed. Simultaneously (to the grinding process), the stones and dehydrated olive fruits (7), which are not grinded yet, operate as ball-mill by kneading and mixing the grinded parts of the dehydrated olive fruits (7) to form dehydrated olive paste (9) that facilitates the separation of oil body and oil droplets. Grinding-Kneading (8) chamber can be equipped with a scraper for better mixing (if required). Grinding and kneading (8) processes generate heating that warms up the dehydrated solid paste (9). This heat should be controlled to enhance both oil separation and production of the volatile compounds that are essential for the quality of virgin olive oil. The time required for the grinding and malaxing processes is important and hence it should be determined based on the required degree of grinding (particles size), whether stoning is required and the degree of kneading. Controlling the time is important in order to avoid problems in the oil separation stage, as well as to avoid possible deteriorating in virgin olive oil quality due to overheating. The Grinder -Kneader-Mixer (8) chamber with its accessories is to be operated on a batch mode.
4. Press-Filtrating (10) of the dehydrated olive paste (9) to separate virgin olive oil (12) from dehydrated solid (11). The press-filter (10) consists of a U-shape mat, with specific pore size, to filter oil by passing the mat between two rolls that squeeze virgin olive oil (12) out of the dehydrated olive paste (9). The mat is then emptied to collect the retained dehydrated solid (11) that is ready for marketing. If the extracted oil is of virgin olive oil (12) quality, based on its content of mucilage, it should be packaged and hence is ready for marketing otherwise, further purification should be carried out in the next step.
5. Vertical centrifugation (13) consists of a conical basin that uses centrifugal force to purify the virgin olive oil (12) from its contents of mucilage (15). Centrifugal force concentrates mucilage (15) as bottom layer in the basin while the virgin olive oil (14) floats as an upper layer in basin. The lower part of the conical basin is equipped with control valve to empty first the mucilage (15) layer and then second the virgin olive oil (14) layer. Mucilage (15) can be mixed with the "dehydrated solid product" (11) or can be marketed as different product.

### PATENT DOCUMENTS CITED IN THE DESCRIPTION

Awad A., Salman, H., and Hung, Y. (2006) olive oil waste treatment. Chapter 5, Book of Waste treatment in the food processing industry. Editors Wang, L., Lo, H., Hung, Y., and Yapijakis, C., Taylor & Francis Group, LLC.
I.O.C. International Olive Council. (1996). COI/TT.20/Documents 15/Rev. 1. Organoleptic assessment of olive oil. Resolution RES-3/75-iv/96, 20 November; Madrid, Spain.
Giovacchino, L. Sestili, S., and Vicenzo, D. (2002) Influence of olive processing on virgin olive oil quality. Eur. J. Lipid Sci. Technol. 104(2002): 587-601.
Servili, m., Taticchi, A., Esosto, S., Sordini, B., and Urbani, S. (2012) Technological aspects of olive oil production. Chapter 8, Licensee InTech Open. INTECH Open Access Publisher.

## Claims

1. A process of sustainable virgin-olive-oil production using whole olive fruit constituents and eliminating waste water, pomace and alpeorujo as associated waste byproducts, wherein the sustainable process is a sequential industrial process that produces final products, which comprise "pure distilled water" (5), dehydrated-solid (11) and virgin olive-oil (12) or purified virgin olive-oil (14) and mucilage (15), the sustainable process comprises the following steps:
• washing (2) of whole olive fruit (1) by the produced "pure distilled water" (5);
• dehydrating (4) the washed olive fruit (3) by evaporating vegetation water;
• condensing vegetation water vapor to produce "pure distilled water" (5);
• simultaneous grinding and malaxation (8); kneading and mixing of dehydrated olive fruit (7) to produce a dehydrated olive paste (9);
• press-filtering (10) the dehydrated olive paste (9) to produce a dehydrated solid (11), and virgin olive oil (12); and
• Centrifuging (13) the virgin olive oil (12) to produce purified virgin olive oil (14) and mucilage (15).

2. The process according to claim 1, wherein a product of dehydrated solid (11) is further produced by the step of press-filtration (10) of the dehydrated olive paste (9), wherein the dehydrated solid (11) is composed of the residual solid of the olive fruit (3), the dehydrated solid (11) is rich in protein, carbohydrates, cellulose, lignin, phenols and salts.

3. The process according to claim 1, wherein the dehydration process (4) is performed in a closed chamber equipped with microwave radiation source and operated at normal atmospheric pressure or under vacuum to control washed olive fruit (3) temperature, wherein vegetation water of the washed olive fruits (3) is evaporated as water vapor and then is condensed by heat exchanging if the operation pressure is normal atmospheric pressure or by pressure-changing if the operation pressure is vacuum, producing "pure distilled water" (5).

4. The process according to claim 1, wherein the step of the simultaneous grinding and malaxing (8) is performed in a single closed chamber in which grinding is carried out by sequence-grinding, based on differentiating olive fruit constituents; skin and pulp and then stones and seeds, simultaneously kneading and mixing the grinded dehydrated olive fruit (7) wherein the olive stones and the olive fruit function as kneader and mixer.

5. The process according to claim 1, wherein the step of the press-filtration (10) process, is performed using a U-shape mat that passes between two-rolls to squeeze the virgin olive oil (12) out of the dehydrated olive paste (9), wherein the U-shaped mat is then emptied to collect the dehydrated solid (11).

6. The process according to claim 1, wherein the step of centrifugation (13) process, is performed in a conical chamber that uses centrifugal force, to purify virgin olive oil (12), which separates purified virgin olive oil (14) at the top layer and the mucilage (15) is concentrated at the bottom layer, the centrifuge chamber is further equipped with a valve, at the bottom, to first empty the mucilage layer (15) and then the purified virgin olive oil (14).

## Patentansprüche

1. Ein Prozess der nachhaltigen Herstellung von nativem Olivenöl unter Verwendung ganzer Olivenfruchtbestandteile und unter Eliminierung von Abwasser, Trester und Alpeorujo als damit verbundene Abfallnebenprodukte, wobei der nachhaltige Prozess ein sequenzieller industrieller Prozess ist, der Endprodukte produziert, die "reines destilliertes Wasser "umfassen" (5), dehydrierter Feststoff (11) und natives Oliven-Öl (12) oder gereinigtes natives Oliven-Öl (14) und Schleimstoffe (15), der nachhaltige Prozess umfasst die folgenden Schritte:
• Waschen (2) der gesamten Olivenfrucht (1) mit dem erzeugten "reinen destillierten Wasser" (5);
• Entwässerung (4) der gewaschenen Olivenfrucht (3) durch Verdunstung von Vegetationswasser;
• Kondensieren des Wasserdampfs der Vegetation, um "reines destilliertes Wasser" (5) zu erzeugen;
• gleichzeitiges Knirschen und Malaxation (8); Kneten und Mischen von dehydrierten Olivenfrüchten (7), um eine dehydrierte Olivenpaste (9) herzustellen;
• Pressfiltrieren (10) der dehydrierten Olivenpaste (9), um einen dehydrierten Feststoff (11) und natives Olivenöl (12) zu erzeugen; Und
• Zentrifugieren (13) des nativen Olivenöls (12), um gereinigtes natives Olivenöl (14) und Schleimstoffe (15) herzustellen.

2. Verfahren nach Anspruch 1, wobei durch den Schritt der Pressfiltration (10) der dehydrierten Olivenpaste (9) weiterhin ein Produkt aus dehydriertem Feststoff (11) hergestellt wird, wobei der dehydratisierte Feststoff (11) besteht aus: Der restliche Feststoff der Olivenfrucht (3), der dehydrierte Feststoff (11), ist reich an Proteinen, Kohlenhydraten, Zellulose, Lignin, Phenolen und Salzen.

3. Verfahren nach Anspruch 1, wobei der Dehydrierungsprozess (4) in einer geschlossenen Kammer durchgeführt wird, die mit einer Mikrowellenstrahlungsquelle ausgestattet ist und bei normalem Atmosphärendruck oder unter Vakuum betrieben wird, um die Temperatur der gewaschenen Olivenfrüchte (3) zu steuern, wobei Vegetationswasser von Die gewaschenen Olivenfrüchte (3) werden als Wasserdampf verdampft und dann durch Wärmeaustausch kondensiert, wenn der Betriebsdruck normaler Atmosphärendruck ist, oder durch Druckänderung, wenn der Betriebsdruck Vakuum ist, wodurch "reines destilliertes Wasser" entsteht (5).

4. Verfahren nach Anspruch 1, wobei der Schritt des gleichzeitigen Mahlens und Malaxierens (8) in einer einzigen geschlossenen Kammer durchgeführt wird, in der das Mahlen durch Sequenzmahlen auf der Grundlage unterschiedlicher Olivenfruchtbestandteile durchgeführt wird, Schale und Fruchtfleisch, dann Kerne und Kerne, wobei die gemahlene, dehydrierte Olivenfrucht (7) gleichzeitig geknetet und gemischt wird, wobei die Olivenkerne und die Olivenfrucht als Kneter und Mixer fungieren.

5. Verfahren nach Anspruch 1, wobei der Schritt der Pressfiltration (10) unter Verwendung einer U-förmigen Matte durchgeführt wird, die zwischen zwei Walzen hindurchläuft, um das native Olivenöl (12) aus der dehydrierten Olive herauszupressen Paste (9), wobei die U-förmige Matte anschließend entleert wird, um den entwässerten Feststoff (11) aufzufangen.

6. Verfahren nach Anspruch 1, wobei der Schritt des Zentrifugierens (13) in einer konischen Kammer durchgeführt wird, die Zentrifugalkraft nutzt, um natives Olivenöl (12) zu reinigen, wobei gereinigtes natives Olivenöl (14) abgetrennt wird Während die oberste Schicht und der Schleim (15) in der unteren Schicht konzentriert werden, ist die Zentrifugenkammer weiter unten mit einem Ventil ausgestattet, um zuerst die Schleimschicht (15) und dann das gereinigte native Olivenöl (14) zu entleeren.

## Revendications

1. Procédé de production durable d'huile d'olive vierge utilisant des constituants d'olive entières et éliminant les eaux usées, le marc et les grignons en tant que sous-produits de déchets associés, le procédé durable étant un procédé industriel séquentiel qui donne des produits finaux, qui comprennent 'de l'eau distillée pure' (5), un solide déshydraté (11) et de l'huile d'olive vierge (12) ou de l'huile d'olive vierge purifiée (14) et du mucilage (15), le procédé durable comprenant les étapes suivantes :
• lavage (2) des olives entières (1) à `l'eau distillée pure' produite (5);
• déshydratation (4) de l'olive lavée (3) en évaporant l'eau de la végétation;
• condensation de la vapeur d'eau de la végétation pour produire de `l'eau distillée pure' (5);
• broyage et malaxage simultanés (8); pétrissage et mélange des olives déshydratées (7) pour produire une pâte d'olive déshydratée (9);
• filtrer à la presse (10) la pâte d'olive déshydratée (9) pour produire un solide déshydraté (11) et de l'huile d'olive vierge (12); et
• centrifugation (13) de l'huile d'olive vierge (12) pour produire de l'huile d'olive vierge purifiée (14) et du mucilage (15).

2. Procédé selon la revendication 1, dans lequel un produit de solide déshydraté (11) est également produit par l'étape de filtration à la presse (10) de la pâte d'olive déshydratée (9), où le solide déshydraté (11) est composé du résidu solide de l'olive (3), le solide déshydraté (11) est riche en protéines, glucides, cellulose, lignine, phénols et sels.

3. Procédé selon la revendication 1, dans lequel le procédé de déshydratation (4) est effectué dans une chambre fermée équipée d'une source de rayonnement à micro-ondes fonctionnant à la pression atmosphérique normale ou sous vide pour contrôler la température des olives lavées (3), dans lequel l'eau de végétation des olives lavées (3) est évaporée sous forme de vapeur d'eau, puis condensée par échange de chaleur si la pression de fonctionnement est la pression atmosphérique normale ou par changement de pression si la pression de fonctionnement est le vide, produisant de `l'eau distillée pure' (5).

4. Procédé selon la revendication 1, dans lequel l'étape de broyage et de malaxage simultanés (8) est effectuée dans une chambre fermée unique dans laquelle le broyage est un broyage séquentiel, basé sur des constituants de différenciation de l'olive; la peau et la pulpe, puis les noyaux et les graines, pétrissant et mélangeant simultanément l'olive déshydratée broyée (7), où les noyaux d'olive et l'olive servent de pétrin et de mélangeur.

5. Procédé selon la revendication 1, dans lequel l'étape du procédé de filtration à la presse (10) est réalisée à l'aide d'un tapis en forme de U qui passe entre deux rouleaux pour extraire l'huile d'olive vierge (12) de la pâte d'olive déshydratée (9), dans lequel le tapis en forme de U est ensuite vidé pour recueillir le solide déshydraté (11).

6. Procédé selon la revendication 1, dans lequel l'étape de centrifugation (13) est réalisée dans une chambre conique qui utilise la force centrifuge, pour purifier l'huile d'olive vierge (12), qui sépare l'huile d'olive vierge purifiée (14) au niveau de la couche supérieure et le mucilage (15) est concentré au niveau de la couche inférieure, la chambre de centrifugation est par ailleurs équipée d'une valve, au fond, pour vider d'abord la couche de mucilage (15) puis l'huile d'olive vierge purifiée (14).
